# EUROPÄISCHE PATENTSCHRIFT

(11) **EP 3 220 527 B1**
(45) Veröffentlichungstag und Bekanntmachung des Hinweises auf die Patenterteilung: **29.04.2020**
(21) Anmeldenummer: 16161060.5
(22) Anmeldetag: 18.03.2016
(51) Int. Cl.: H02M 7/00, H02M 7/483

(54) **MODULARER MEHRSTUFENUMRICHTER**
MODULAR MULTI-STAGE CONVERTER
CONVERTISSEUR MULTI-ETAGE MODULAIRE

(43) Veröffentlichungstag der Anmeldung: 20.09.2017
(73) Patentinhaber: Siemens Aktiengesellschaft, 80333 München (DE)
(72) Erfinder: Blum, Manuel, 85521 Ottobrunn (DE); Galek, Marek, 82398 Polling (DE); Hofmann, Alexander, 91058 Erlangen (DE); Malipaard, Dirk, 90461 Nürnberg (DE); Ruccius, Benjamin, 90425 Nürnberg (DE)

(56) Entgegenhaltungen:
- EP-A1- 2 677 653
- DE-A1-102011 017 597

## Beschreibung

Die Erfindung betrifft einen modularen Mehrstufenumrichter mit einer Reihenschaltung von mehreren Modulen.

Ein modularer Mehrstufenumrichter, auch modularer Multilevel Umrichter oder kurz MMC bzw. M2C (nach dem englischen "modular multilevel converter") genannt, ist ein Umrichter zum Umwandeln einer Spannung in eine andere Spannung. Ein modularer Mehrstufenumrichter kann z.B. eine Gleichspannung in eine Wechselspannung umwandeln, d.h. er wird als Wechselrichter verwendet. Ein modularer Mehrstufenumrichter kann außerdem z.B. eine Wechselspannung in eine Gleichspannung umwandeln, d.h. er wird als Gleichrichter verwendet. Weiterhin kann ein modularer Mehrstufenumrichter eine Wechselspannung in eine in der Frequenz und Amplitude unterschiedliche Wechselspannung umwandeln, ohne zunächst eine Gleichspannung zu erzeugen, d.h. er wird als direkter Umrichter verwendet.

Modulare Mehrstufenumrichter werden vorwiegend im Hochleistungsbereich eingesetzt. Ein mögliches Anwendungsfeld eines modularen Mehrstufenumrichters als Wechselrichter liegt in einem Photovoltaikkraftwerk, in welchem die durch das Kraftwerk erzeugte Gleichspannung in eine Wechselspannung umgewandelt werden muss, um letztere in ein Wechselstromnetz einspeisen zu können.

Ein modularer Mehrstufenumrichter als Gleichrichter wird beispielsweise in der Hochspannungs-Gleichstrom-Übertragung (HGÜ oder englisch HVDC) benötigt. Dabei wird aus einer Wechselspannung eine Gleichspannung erzeugt, welche zum verlustarmen Transport über weite Übertragungsstrecken hinweg genutzt wird. Nach der Übertragung wird die Gleichspannung wiederum mit einem modularen Mehrstufenumrichter als Wechselrichter in eine Wechselspannung umgewandelt, um diese in das Wechselstromnetz einzuspeisen.

In seinem Aufbau umfasst ein modularer Mehrstufenumrichter zumindest eine Reihenschaltung mit mehreren in Reihe geschalteten Modulen. EP 2677653 A1 offenbart einen modularen Mehrstufenumrichter, welcher in diesem Fall drei Reihenschaltungen mit 2N Modulen umfasst. Jede der Reihenschaltungen wird durch eine Wechselspannungsleitung in zwei Arme geteilt. Jeder Arm wiederum ist über ein Drosselelement mit der Wechselspannungsleitung verbunden. Ferner weist jedes Modul einen Energiespeicher und eine Schaltvorrichtung auf. Der jeweilige Energiespeicher ist dazu eingerichtet, eine elektrische Energie zu speichern. In jedem Modul kann der Energiespeicher zumindest teilweise mit elektrischer Energie (auf-)geladen werden. Mithilfe der Schaltvorrichtung kann gesteuert werden, ob der Energiespeicher des jeweiligen Moduls geladen bzw. entladen werden soll oder ob der Energiespeicher überbrückt werden soll.

Aus der DE 102011017597 A1 ist eine Energiespeichervorrichtung bekannt, umfassend mehrere Speichermodule für elektrische Energie, die jeweils an eine Kondensatoreinheit eines einem Umrichter zugehörigen Umrichtersubmoduls zum Laden oder Entladen wenigstens eines Speichermoduls über wenigstens einen ansteuerbaren Gleichspannungssteller angekoppelt sind. Der Gleichspannungssteller ist zum Umwandeln einer an der Kondensatoreinheit anliegenden Kondensatorspannung in eine Ladespannung ausgebildet, die zum Laden des Speichermoduls erforderlich ist, und zum Umwandeln einer beim Entladen an dem Speichermodul anfallenden Entladespannung in die Kondensatorspannung.
Die Schaltvorrichtungen der Module werden durch eine Steuereinrichtung für den Mehrstufenumrichter angesteuert. Hierfür und für die Rückführung von Messwerten zur Aufladung des jeweiligen Energiespeichers sind bidirektionale Kommunikationsverbindungen zwischen den Modulen und der Steuereinrichtung notwendig. Diese sind im Mittel- und Hochspannungsbereich typischerweise als Punkt-zu-Punkt Lichtwellenleiterverbindungen realisiert. Diese sind jedoch teuer, insbesondere durch die notwendige Menge an Verbindungen zwischen der Steuereinrichtung und jedem der Module. Alternativ sind elektrische Busverbindungen bekannt. Bei diesen ist für eine geeignete elektrische Isolation zwischen dem Bus und den einzelnen Modulen zu sorgen, was ebenfalls aufwendig und teuer ist.

Aufgabe der vorliegenden Erfindung ist es, einen leistungsfähigen und kostengünstigen modularen Mehrstufenumrichter mit einer verbesserten Architektur für die Kommunikationsverbindungen bereitzustellen.

Diese Aufgabe wird durch einen Mehrstufenumrichter mit den Merkmalen von Anspruch 1 gelöst.

Der erfindungsgemäße Mehrstufenumrichter umfasst wenigstens einen Zweig, der zwischen einer positiven Sammelschiene und einer negativen Sammelschiene geschaltet ist, wobei der Zweig wenigstens zwei in Serie geschaltete Arme aufweist und wobei die Arme jeweils eine Serienschaltung aus einer Mehrzahl von zweipoligen Submodulen umfassen. Die Submodule umfassen jeweils einen Energiespeicher und eine Kommunikationsverbindung zu einer Steuereinrichtung des Mehrstufenumrichters, wobei mittels der Kommunikationsverbindung zumindest eine Information über einen Ladezustand des Energiespeichers sowie eine Schaltanweisung für einen Schalter des Submoduls übertragbar ist.

Der Mehrstufenumrichter ist dadurch gekennzeichnet, dass für wenigstens einen Teil der Submodule die Kommunikationsverbindung als gemeinsame Kommunikationsverbindung aufgebaut ist und eine Mehrzahl von Isolationsstrecken aufweist, die eine Isolationsfähigkeit von höchstens 5 kV aufweisen.

Mit anderen Worten umfasst der Mehrstufenumrichter wenigstens für einen Teil seiner Module eine gemeinsame Kommunikationsverbindung, die durch Isolationsstrecken in elektrisch voneinander isolierte Teilbereiche unterteilt ist.

Durch die erfindungsgemäße Ausgestaltung wird erreicht, dass die aufwändigen und teuren Punkt-zu-Punkt-Verbindungen zwischen der Steuereinrichtung und den Modulen entfallen können und ersetzt werden durch die gemeinsame Kommunikationsverbindung. Dabei sorgt die Gestaltung der Aufteilung in die Teilbereiche dafür, dass der Spannungsabfall über die Isolationsstrecken höchstens 5 kV beträgt. Dadurch können als Isolationsstrecken vorteilhaft passende niedrigisolierende und vereinfachte Elemente verwendet werden, deren maximale Isolationsfähigkeit weit unterhalb der Betriebsspannungen liegt, die bei Anwendungen von MMC/M2C-Stromrichtern häufig auftreten. Die Isolationsstrecken umfassen bevorzugt Übertrager, alternativ können aber auch Kondensatoren oder kapazitive oder induktive Koppler verwendet werden. Vor allem bei Systemen kleiner und mittlerer Leistung, bei denen das Ansteuersystem einen größeren Anteil an den Gesamtkosten ausmacht, wird dadurch eine erhebliche Senkung der Baukosten und Einsparung an Bauraum erreicht.

Vorteilhafte Ausgestaltungen der erfindungsgemäßen Einrichtung gehen aus den von Anspruch 1 abhängigen Ansprüchen hervor. Dabei kann die Ausführungsform nach Anspruch 1 mit den Merkmalen eines der Unteransprüche oder vorzugsweise auch mit denen aus mehreren Unteransprüchen kombiniert werden. Demgemäß können für den Stromwandler noch zusätzlich folgende Merkmale vorgesehen werden:
- Die Aufteilung der gemeinsamen Kommunikationsverbindung in Teilbereiche kann derart gestaltet sein, dass der Spannungsabfall über wenigstens einen Teil der Isolationsstrecken zwischen zwei Teilbereichen jeweils höchstens 3,3 kV, 2 kV beträgt. In weiteren Ausgestaltungen können als Obergrenze für den Spannungsabfall 1,2 kV, 1 kV oder auch 600 V realisiert sein. Die Aufteilung wird dabei zweckmäßig durch die Anzahl der verwendeten Isolationsstrecken reguliert. Insbesondere sind das wenigstens 10 oder in einer anderen Ausgestaltung wenigstens 20 Isolationsstrecken, wobei die Zahlen sich auf einen Arm oder einen Zweig des Mehrstufenumrichters beziehen.
- Die gemeinsame Kommunikationsverbindung ist bevorzugt separat realisiert für wenigstens einen Arm eines Zweigs, insbesondere für alle Arme des Mehrstufenumrichters oder aber für einen oder mehrere oder alle der Zweige des Mehrstufenumrichters. Dabei sind bevorzugt die Kommunikationsverbindungen aller Submodule eines Arms oder eines Zweigs als gemeinsame Kommunikationsverbindung aufgebaut.
- Es kann je eine gemeinsame Kommunikationsverbindung für jeden der Arme vorgesehen sein. Alternativ kann auch je eine gemeinsame Kommunikationsverbindung für jeden der Zweige vorhanden sein.
- Besonders vorteilhaft ist es, wenn die Kommunikationsverbindungen wenigstens eine Busverbindung ausbilden, bei der Signale jedes Submoduls direkt von der Steuereinrichtung empfangbar sind und umgekehrt. Es wird also mit anderen Worten keine Punkt-zu-Punkt-Verbindung verwendet. Hierdurch wird in besonderer Weise Bauraum und Komplexität im Aufbau gespart, da bei Mehrstufenumrichtern mit einer großen Anzahl an Submodulen eine große Anzahl an optischen oder elektrischen Kabeln eingespart wird.
- Alternativ kann die gemeinsame Kommunikationsverbindung als Verbindungen von einem Submodul zum nächsten Submodul aufgebaut sein. Mit anderen Worten wird also die Steuereinrichtung für den Mehrstufenumrichter mit einem ersten der Submodule verbunden und dieses wiederum mit einem zweiten Submodul usw. Dabei unterbleibt aber eine direkte Durchverbindung der einzelnen Teilbereiche der gemeinsamen Kommunikationsverbindung. Für die Kommunikation eines Submoduls mit der Steuereinrichtung und umgekehrt müssen die Datenpakete in dieser Ausgestaltung daher von Submodul zu Submodul weitergeleitet werden. Bei dieser Ausgestaltung wird also ebenfalls keine sternförmige Verbindung verwendet mit denselben Vorteilen wie bei der Busverbindung.
- Die Anzahl der Isolationsstrecken kann wenigstens die Hälfte der Anzahl der Submodule betragen, insbesondere wenigstens 90% der Anzahl der Submodule. Zweckmäßig sind dies wenigstens 10, insbesondere wenigstens 20 Isolationsstrecken. Bevorzugt weist die gemeinsame Kommunikationsverbindung zwischen den Anschlussstellen jeweils zweier in der Serienschaltung des Arms benachbarter Submodule je eine der Isolationsstrecken auf, so dass die Anzahl der Isolationsstrecken im Wesentlichen der Anzahl der Submodule entspricht.
- Die Reihenfolge der Anbindung der Submodule an die gemeinsame Kommunikationsverbindung entspricht zweckmäßig der Reihenfolge der Anordnung der Submodule im jeweiligen Arm des Mehrstufenumrichters. Dadurch wird der Spannungsabfall zwischen den Anschlussstellen der Submodule an die Kommunikationsverbindung auf diejenige Spannungsdifferenz begrenzt, die die Submodule durch ihren Energiespeicher bereitstellen können.
- Die gemeinsame Kommunikationsverbindung kann ringförmig ausgebildet sein mit zwei parallel zueinander geschalteten Strängen, die an der Anschlussstelle eines ersten Submoduls und an der Anschlussstelle eines zweiten Submoduls miteinander verbunden sind. Die ringförmige Ausgestaltung ist sowohl bei einer Busverbindung als auch bei einer strangartigen Verbindung möglich. In beiden Fällen erhöht die ringförmige Gestaltung die Ausfallsicherheit, da eine Redundanz bei der Kommunikation mit den Submodulen geschaffen wird.
- Es ist möglich, dass nur ein erster der Stränge direkte Verbindungen mit den Submodulen aufweist, während der zweite Strang nur an den zwei erwähnten Anschlussstellen mit dem ersten Strang und damit indirekt mit den Submodulen verbunden ist. Hierdurch wird vorteilhaft eine Redundanz der Kommunikation geschaffen bei gleichzeitig immer noch sehr einfachem Aufbau, da im zweiten Strang die vielen Anschlussstellen an die Submodule unnötig sind.
- Alternativ können auch beide Stränge direkte Verbindungen mit den Submodulen aufweisen. Dadurch wird die Ausfallsicherheit der Kommunikationsverbindung weiter erhöht, da bei diesem Aufbau sogar beim Ausfall von mehreren Teilstücken in jedem der Stränge unter Umständen noch alle Submodule ansteuerbar sind.
- In beiden Fällen, d.h. wenn beide Stränge direkt Verbindungen mit den Submodulen aufweisen oder wenn nur einer der Stränge direkte Verbindungen mit den Submodulen aufweist, wird bevorzugt in beiden parallelen Strängen des Ringbusses im Wesentlichen dieselbe Anzahl an Isolationsstrecken verwendet. Dadurch wird in beiden Strängen die nötige Isolationsfähigkeit hergestellt.
- Weist einer der Stränge keine direkten Verbindungen zu den Submodulen auf, so kann in diesem Strang die Isolationsfähigkeit zwischen den Anschlussstellen alternativ durch eine einzelne oder wenige Isolationsstrecken von höherer Isolationsfähigkeit hergestellt werden, um Bauraum zu sparen.
- Die Submodule eines ersten Arms eines ersten Zweigs können mit einem ersten der Stränge verbunden sein und die Submodule eines ersten Arms eines zweiten Zweigs mit einem zweiten der Stränge. Hierdurch wird eine ringförmige Kommunikationsverbindung geschaffen, in der Submodule zweier Zweige, also beispielsweise zweier Phasen zusammen angesteuert werden. Die Submodule, die nahe an den Gleichspannungsschienen angeordnet sind, also insbesondere das erste und letzte Modul jedes Zweigs, haben über die Zweige hinweg die am nächsten aneinander liegenden Spannungsniveaus, während die mittig in einem Zweig liegenden Module bei Verwendung als Wechselrichter stark wechselnde und auseinander liegende Spannungsniveaus aufweisen. Daher wird eine Querverbindung der Kommunikationsverbindung zwischen den Zweigen bevorzugt im Bereich des oder der ersten und/oder letzten Moduls jedes beteiligten Zweigs vorgenommen. Dadurch kann die Querverbindung vorgenommen werden, ohne dabei eine hochisolierende Isolierstrecke verwenden zu müssen. Die Querverbindung kann entweder direkt, d.h. ohne Isolation oder unter Verwendung von einer oder mehreren Isolationsstrecken mit einer maximalen Isolationsfähigkeit von 3,3 kV oder 2 kV vorgenommen werden.
- Die Anbindung der Steuereinrichtung an die Kommunikationsverbindung erfolgt bevorzugt in einem Teilbereich der Kommunikationsverbindung, deren Spannungsniveau nahe demjenigen der Steuereinrichtung liegt. Alternativ oder zusätzlich kann die Steuereinrichtung mit der Kommunikationsverbindung über eine hochisolierende Isolationsstrecke verbunden sein.

Weitere vorteilhafte Ausgestaltungen des Mehrstufenumrichters gehen aus den vorstehend nicht angesprochenen Unteransprüchen hervor. Die Erfindung wird nachfolgend an Hand von bevorzugten Ausführungsbeispielen unter Bezugnahme auf die Zeichnung noch weiter erläutert. Dabei zeigen jeweils in schematisierter Form
Figur 1 einen Ausschnitt eines ersten Mehrstufenumrichters mit einem Kommunikationsbus für einen Zweig;
Figur 2 einen Ausschnitt eines zweiten Mehrstufenumrichters mit einem Ringbus für einen Arm eines Zweigs;
Figur 3 einen Ausschnitt eines dritten Mehrstufenumrichters mit einem Ringbus für zwei Zweige;
Figur 4 eine Ausgestaltung der verwendeten Kommunikationstelegramme;
Figur 5 eine weitere Ausgestaltung der verwendeten Kommunikationstelegramme.

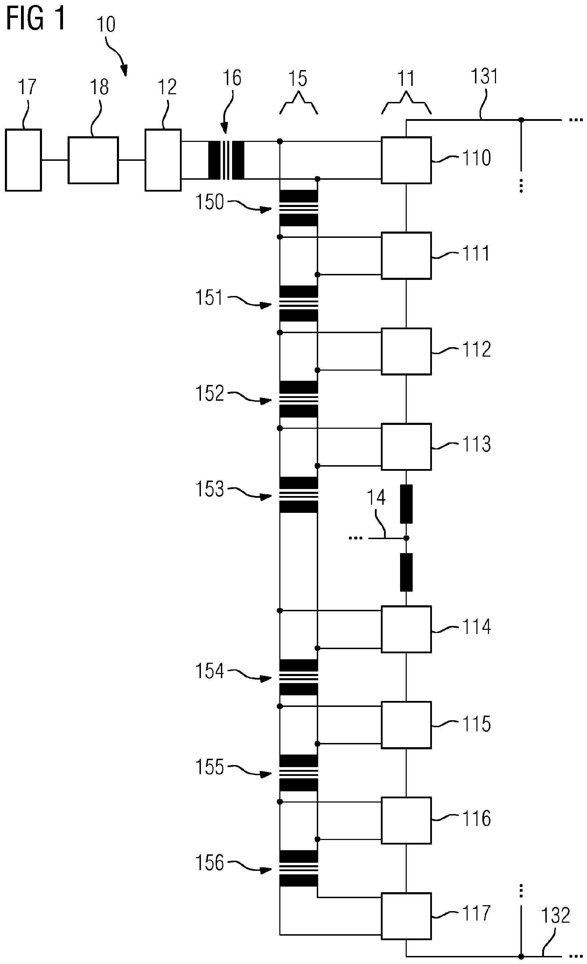

Figur 1 zeigt einen ersten beispielhaften Aufbau der Kommunikationsverbindungen für einen ersten beispielhaften Mehrstufenumrichter 10. Dabei ist der erste Mehrstufenumrichter 10 nur ausschnittsweise dargestellt. Der erste Mehrstufenumrichter 10 ist ausgestaltet zur Wandlung einer zwischen einer positiven Gleichspannungsschiene 131 und einer negativen Gleichspannungsschiene 132 anliegenden Gleichspannung in eine dreiphasige Wechselspannung. Dazu weist der erste Mehrstufenumrichter 10 für jede der drei Phasen einen Zweig 11 auf, von denen aber für bessere Übersicht nur der erste Zweig 11 gezeigt ist. Der Zweig weist zwei in Serie geschaltete Arme auf, wobei jeder der Arme wiederum mehrere in Serie geschaltete Module umfasst. Der erste Zweig 11 des ersten Mehrstufenumrichters weist im oberen Arm vier Module 110...113 auf. Dabei ist diese Zahl an Modulen nur beispielhaft. Mehrstufenumrichter können auch 30, 50 oder 100 Module pro Arm oder pro Zweig aufweisen. Der untere Arm des ersten Zweigs 13 weist ebenfalls vier Module 114...117 auf.

In dem Beispiel gemäß der Figur 1 umfasst die Steuerung des Mehrstufenumrichters 10 zwei separate Teile: einen ersten Teil 17, der beispielsweise das Human Machine Interface umfasst und andere externe Schnittstellen. Der erste Teil 17 ist auf Erdpotential angeordnet. Über eine Isolationsstrecke 18 mit hoher Isolationsfähigkeit ist der erste Teil 17 mit einem zweiten Teil 12 der Steuerung verbunden. Der zweite Teil 12 der Steuerung ist ausgestaltet, die Steuerung der Module 110...117 vorzunehmen und steuert somit die eigentliche Funktion des ersten Mehrstufenumrichters 10.

Die Verbindung des zweiten Teils 12 der Steuerung mit den Modulen 110...117 erfolgt über einen elektrischen Kommunikationsbus 15. Der Kommunikationsbus 15 ist über eine erste Isolationsstrecke, beispielsweise in Form eines Übertragers 16 mit dem zweiten Teil 12 der Steuerung verbunden. Da der zweite Teil 12 der Steuerung durch die Isolationsstrecke 18 mit hoher Isolationsfähigkeit vom Erdpotential entkoppelt ist, kann der zweite Teil 12 selbst auf einem Spannungsniveau arbeiten, das im Wesentlichen dem Spannungsniveau eines oder mehrerer der Module 110...117 entspricht. Daher kann der Übertrager 16 so gestaltet sein, dass er eine maximale Isolationsfähigkeit von beispielsweise 3 kV, 2,5 kV, 2 kV oder auch nur 1 kV aufweist. Mit anderen Worten ist eine hohe Isolationsfähigkeit zwischen dem zweiten Teil 12 der Steuerung und dem Kommunikationsbus 15 unnötig. Weiterhin ist das Spannungsniveau derjenigen der Module 110...117, die direkt an die Gleichspannungsschienen ankoppeln, am besten durch die Spannung der Gleichspannungsschienen festgelegt, so dass es sich anbietet, den zweiten Teil 12 bei diesen Modulen 110, 117 anzuschließen. Durch die Isolationsstrecke 18 kann der zweite Teil 12 aber auch an einer anderen Stelle des Kommunikationsbusses 15 ankoppeln, bei der ein zeitlich variables Spannungsniveau vorliegt.

Neben einer induktiven Kopplung über die Übertrager 16, 150...156 kann die Kopplung der Teilbereiche auch kapazitiv oder optisch erfolgen, wobei in jedem Fall die nötige Isolationsfähigkeit auf die bereits genannten Werte begrenzt ist.

Die einzelnen Module 110...117 sind zweiadrig und direkt, d.h. ohne weitere Isolation mit dem Kommunikationsbus 15 verbunden. Zwischen den Anbindungen des Kommunikationsbusses 15 an die einzelnen Module 110...117 ist der Kommunikationsbus 15 selbst wiederum durch weitere Übertrager 150...156 in voneinander elektrisch isolierte zweiadrige Abschnitte unterteilt. Die Isolationsfähigkeit der einzelnen Übertrager 150...156 liegt dabei im Bereich der maximalen Spannung, die ein einzelnes der Module 110...117 erzeugt. Diese Isolationsfähigkeit reicht aus, da die Aufteilung des Kommunikationsbusses 15 in Abschnitte und deren Anbindung an die Module 110...117 der Anordnung der Module 110...117 selbst folgt und somit die Spannungsdifferenz zwischen den Abschnitten der einzelnen Modulspannung, d.h. der durch das Modul 110...117 erzeugbaren Spannungsdifferenz entspricht. So können beispielsweise Übertrager 150...156 mit einer maximalen Isolationsfähigkeit von 2 kV verwendet werden, obwohl der Mehrstufenumrichter 10 für eine wesentlich höhere Betriebsspannung ausgelegt ist.

Im vorliegenden Beispiel liegt wie in Figur 1 dargestellt daher für jedes der Module 110...117 ein eigener, vom Rest des Kommunikationsbusses 15 isolierter Abschnitt im Kommunikationsbus 15 vor. In alternativen Ausgestaltungen könnte die Zahl der Isolationsstrecken, also der Übertrager 150...156 auch gegenüber der Zahl der Module 110...117 reduziert werden, sodass beispielsweise je zwei Module 110...117 sich einen Abschnitt des Kommunikationsbusses 15 teilen. In so einer Ausgestaltung ist zu gewährleisten, dass die Übertrager die doppelte Modulspannung isolieren können.

Im Vergleich zu einer Punkt-zu-Punkt-Anbindung der Module 110...117, beispielsweise optisch, werden also statt acht hochisolierender optischer Verbindungen, die aufwändig, bauraumtechnisch unvorteilhaft bei einer großen Zahl von Modulen und teuer sind, vorteilhaft nur eine hochisolierende Verbindung und im gegebenen Beispiel acht einfache Übertrager 16, 150...156 mit einer Isolationsfähigkeit von beispielsweise 2 kV verwendet.

Auch wenn eine durchgängige Busverbindung wie aus dem Stand der Technik bekannt verwendet wird, ist deren Spannungsniveau von dem der meisten Module 110...117 deutlich entfernt und es sind hochisolierende Verbindungen zum jeweiligen Modul nötig, also im vorliegenden Beispiel letztlich ebenfalls acht hochisolierende, beispielsweise optische, Anschlüsse mit den gleichen bereits angesprochenen Nachteilen, die von der Erfindung überwunden werden.

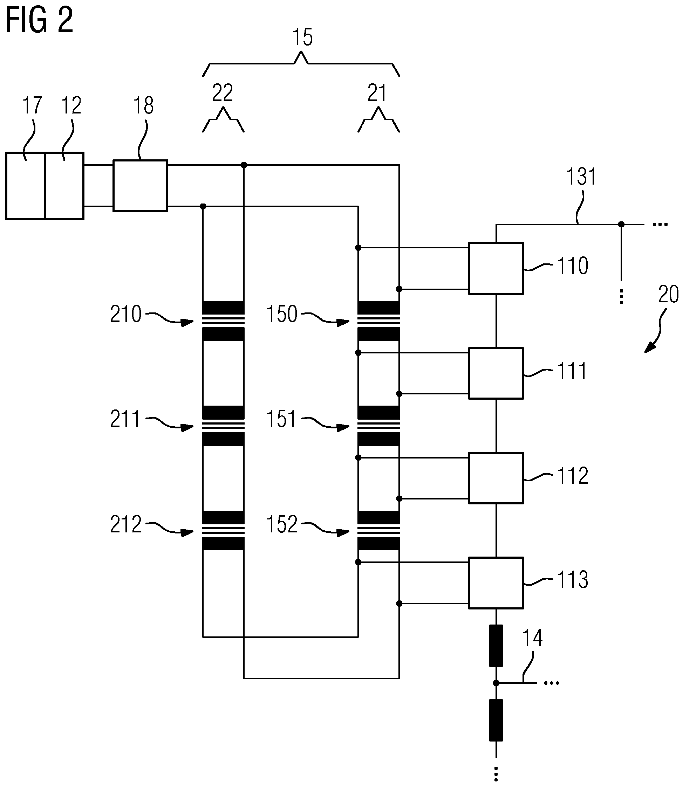

Figur 2 zeigt als zweites Ausführungsbeispiel einen Ausschnitt eines zweiten Mehrstufenumrichters 20, der bzgl. der Module und Anschlüsse analog zum ersten Mehrstufenumrichter 10 aufgebaut ist. Die Ansteuerung der Module ist in diesem Ausführungsbeispiel jedoch anders aufgebaut als im ersten Ausführungsbeispiel gemäß Figur 1.

Die Steuerung ist im zweiten Ausführungsbeispiel komplett mit erstem und zweitem Teil 17, 12 auf Erdpotential angeordnet. Die Verbindung zwischen dem zweiten Teil 12 und dem Kommunikationsbus 15 erfolgt daher im zweiten Ausführungsbeispiel über eine Isolationsstrecke 18 mit hoher Isolationsfähigkeit, beispielsweise eine hochisolierende optische Verbindung.

Der Kommunikationsbus 15 selbst ist im zweiten Ausführungsbeispiel in zwei parallele Stränge 21, 22 aufgeteilt, die einen Ringbus ausbilden. Im zweiten Ausführungsbeispiel ist der Kommunikationsbus 15 im Gegensatz zum ersten Ausführungsbeispiel nur für die Module 110...113 eines Arms eines Zweigs ausgeführt, während für die weiteren Module der anderen Arme des Zweigs 11 und der weiteren Zweige zusätzliche, voneinander separate Kommunikationsbusse ausgebildet sind. Durch die Aufteilung in mehrere Kommunikationsbusse wird die Häufigkeit der Ansteuerung der einzelnen Module 110...113 erhöht und dadurch der Betrieb des Mehrstufenumrichters 20 verbessert.

Der erste der zwei Stränge 21 ist dabei im zweiten Ausführungsbeispiel analog zum Kommunikationsbus 15 aus dem ersten Ausführungsbeispiel realisiert. Die Module 150...153 sind direkt mit dem jeweiligen Abschnitt des ersten Strangs 21 verbunden. Zwischen den Anbindungsstellen der Module 150...153 ist jeweils eine Isolationsstrecke in Form eines Übertragers 150...152 angeordnet, die den ersten Strang 21 in isolierte Teilbereiche aufteilt.

Im Unterschied zum Kommunikationsbus 15 aus dem ersten Ausführungsbeispiel ist jedoch der zweite Strang 22 vorgesehen, ausgestaltet als eine parallel zum ersten Strang 21 liegende Verbindung der Verbindungspunkte des ersten Moduls 110 und des dritten Moduls 113. Der zweite Strang 22 ist dabei analog zum ersten Strang 21 durch ebenfalls drei Übertrager 210...212 in gleicher Weise in Teilbereiche aufgeteilt, wodurch die insgesamt gleiche Isolationsfähigkeit zwischen den beiden Anschlusstellen des zweiten Strangs 22 geschaffen ist.

Im Unterschied zum ersten Strang 21 sind am zweiten Strang 22 keine Module angeschlossen. Es ist daher alternativ zu den Übertragern 210...212 auch möglich, die Isolationsfähigkeit des zweiten Strangs 22 auch durch eine andere hochisolierende Isolationsstrecke herzustellen, bei der die Unterteilung in Teilbereiche unterbleibt.

Insgesamt wird durch die beiden Stränge 21, 22 eine redundante Anbindung der Module erreicht. Dadurch wird vorteilhaft die Ausfallsicherheit des Mehrpunktumrichters 20 erhöht.

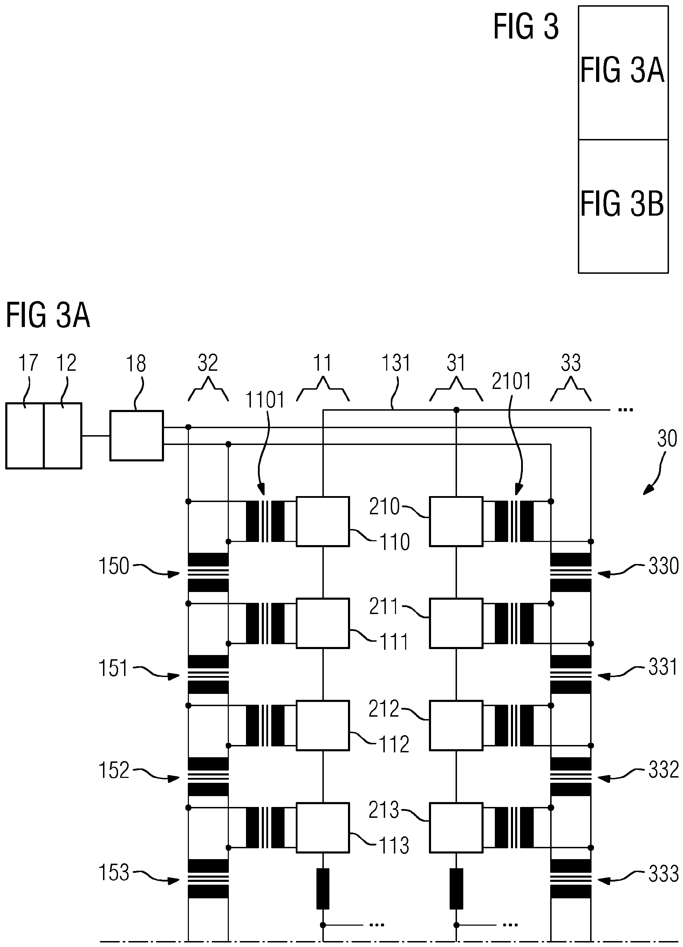

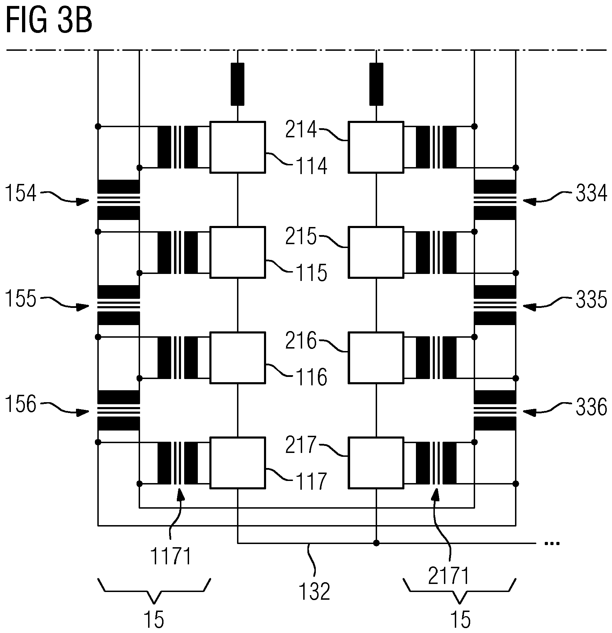

Figur 3 zeigt als drittes Ausführungsbeispiel einen Ausschnitt eines dritten Mehrstufenumrichters 30, der bzgl. der Module und Anschlüsse analog zum ersten und zweiten Mehrstufenumrichter 10, 20 aufgebaut ist. Die Ansteuerung der Module ist im dritten Ausführungsbeispiel jedoch wiederum anders aufgebaut als im ersten Ausführungsbeispiel gemäß Figur 1. Wie bereits ausgeführt ist die Zahl der Module pro Zweig von acht nur beispielhaft und reale Umrichter können wesentlich mehr Module pro Zweig umfassen.

Die Steuerung ist im dritten Ausführungsbeispiel wie im zweiten Ausführungsbeispiel komplett mit erstem und zweitem Teil 17, 12 auf Erdpotential angeordnet. Die Verbindung zwischen dem zweiten Teil 12 und dem Kommunikationsbus 15 erfolgt daher im zweiten Ausführungsbeispiel über eine Isolationsstrecke 18 mit hoher Isolationsfähigkeit, beispielsweise eine hochisolierende optische Verbindung.

Ähnlich zum zweiten Ausführungsbeispiel umfasst der Kommunikationsbus 15 im dritten Ausführungsbeispiel einen ersten und zweiten Strang 32, 33, die parallel zueinander geschaltet sind. Im Unterschied zum zweiten Ausführungsbeispiel ist der zweite Strang 33 jedoch nicht als bloße Redundanz vorhanden, sondern dient der Ansteuerung der Module 210...217. Der erste und zweite Strang 32, 33 sind analog zu den bisherigen Ausführungsbeispielen dafür unterteilt in Teilbereich durch Isolationsstrecken in Form von Transformatoren 150...156, 330...336. Im Unterschied zu den bisherigen Ausführungsbeispielen ist im Anschluss jedes der Module 110...117, 210...217 ebenfalls eine Isolationsstrecke in Form eines Transformators 1101...2171 vorhanden. Diese ist optional, erlaubt aber vorteilhaft eine einfachere Gestaltung der Modulelektronik.

Der Kommunikationsbus 15 verfügt über zwei Querverbindungen zwischen den Strängen 32, 33, durch die die Stränge 32, 33 zum Ring geschlossen werden. Damit in diesen Querverbindungen keine starke Isolation nötig ist, wird diese Querverbindung dort angeordnet, wo die Spannungsniveaus der Module zwischen den beiden Zweigen im Betrieb ähnlich bleiben. Das ist bei den Modulen nahe der Gleichspannungsschienen der Fall, weshalb die Querverbindung zum einen bei den ersten beiden Modulen 110, 210 der Zweige 11, 31 und bei den letzten beiden Modulen 117, 217 der Zwei 11, 31 angeordnet ist.

Die drei Ausführungsbeispiele zeigen verschiedene Kombinationen von Elementen wie der Anbindung der Module über eine jeweils eigene Isolationsstrecke, einen gemeinsamen Kommunikationsbus über mehrere Zweige, eigene Busse für jeden Arm und Ringbusse. Die Ausführungsbeispiele sind hierbei keineswegs zwingende Zusammensetzungen der Elemente, vielmehr lassen sich die Elemente auch in anderer Zusammensetzung kombinieren als in den Ausführungsbeispielen angegeben. Eine in den Ausführungsbeispielen nicht gezeigte Ausführungsvariante besteht darin, dass bei einem Ringbus ein Teil der Module oder jedes der Module mit beiden Strängen des Ringbusses verbunden ist, wodurch die Ausfallsicherheit des Ringbusses nochmals erhöht wird.

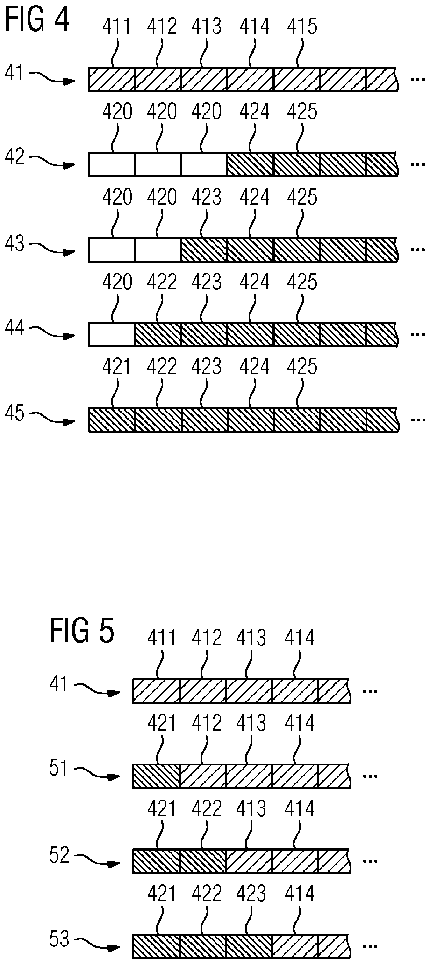

Die Figuren 4 und 5 zeigen Möglichkeiten, wie die Datenpakete oder Kommunikationstelegramme in einem Mehrstufenumrichter gemäß der Erfindung aufgebaut und verwendet werden können. Wird ein Kommunikationsbus verwendet, der eine direkte Kommunikation von jedem der Submodule zur Steuerung erlaubt, ist die Form der Datenpakete gemäß den Figuren 4 und 5 unnötig. Ist die gemeinsame Kommunikationsverbindung jedoch in einer Strangform als Verbindung von Submodul zu Submodul ausgeführt, ist die Form der Datenpakete vorteilhaft.

Steuerbefehle der Steuerung werden als Steuerdatenpakete 41 aufgebaut und versandt. Ein solches Steuerdatenpaket 41 umfasst Steuerbefehle 411...415 für die einzelnen Submodule. Das erste Submodul entnimmt dem Steuerdatenpaket 41 den ersten Steuerbefehl 411 und reicht das Datenpaket an das nächstfolgende zweite Submodul weiter. Dieses entnimmt dem Steuerdatenpaket 41 den zweiten Steuerbefehl 412 und so fort.

Eine Rückmeldung der Submodule erfolgt in der Form von Messdatenpaketen 42...45. Diese werden ausgehend vom letzten Submodul abgesandt, jeweils zum davor angeordneten Submodul. Das Messdatenpaket 42 umfasst in diesem Beispiel Messdaten 424. 425 vom vierten und fünften Submodul und eventuell noch weitere Messdaten von weiteren Submodulen. Das vierte Submodul reicht das Datenpaket weiter zum dritten Submodul. Das dritte Submodul fügt dem Messdatenpaket 42 eigene Messdaten 423 zu. Das kann dadurch passieren, dass die Messdaten 423 an den Beginn des Messdatenpakets 42 gesetzt werden oder dass ein Platzhalter ersetzt wird, der an der Stelle der Messdaten 423 von den weiter hinten liegenden Submodulen mitversandt wurde. Daraufhin gibt das dritte Submodul das nun veränderte Messdatenpaket 43 an das zweite Submodul weiter. Dieses verfährt dann ebenso.

Das vollständige Messdatenpaket 45 mit Messdaten aller Submodule wird schlussendlich vom ersten Submodul, das die einzige direkte Verbindung zur Steuerung aufweist, zu der Steuerung übermittelt. Die Steuerdatenpakete 41 und die vollständigen Messdatenpakete 45 haben dadurch einen analogen Aufbau.

Figur 5 zeigt eine Form für den Aufbau und die Weitergabe der Datenpakete, der bei einer ringartigen Struktur ohne direkte Verbindung der Submodule zur Steuerung verwendet werden kann.

Auch in diesem Fall werden die Steuerbefehle der Steuerung als Steuerdatenpakete 41 aufgebaut und versandt. Ein solches Steuerdatenpaket 41 umfasst wiederum die Steuerbefehle 411...415 für die einzelnen Submodule. Das erste Submodul entnimmt dem Steuerdatenpaket 41 den ersten Steuerbefehl 411 und reicht das Datenpaket an das nächstfolgende zweite Submodul weiter. Dieses entnimmt dem Steuerdatenpaket 41 den zweiten Steuerbefehl 412 und so fort.

Im Unterschied zum Vorgehen gemäß Figur 4 ersetzt jedoch das erste Submodul in diesem Fall den ersten Steuerbefehl 411 durch die eigenen Messdaten 421, die an die gleiche Stelle im Datenpaket gesetzt werden und somit in diesem Beispiel an der Spitze des veränderten Datenpakets 51 stehen. Das zweite Submodul erhält somit vom ersten Submodul das veränderte Datenpakets 51, das Messdaten 421 und Steuerbefehle 412...415 umfasst. Das zweite Submodul ersetzt den zweiten Steuerbefehl 412 durch die eigenen Messdaten 422, die an die gleiche Stelle im Datenpaket gesetzt werden und somit in diesem Beispiel direkt auf die Messdaten 421 des ersten Submoduls folgen. Das zweite Submodul gibt dann ein weiter verändertes Datenpaket 52 an das dritte Submodul weiter, das ebenso verfährt.

Das letzte Submodul einer solchen Folge an Submodulen ist mit der Steuerung direkt verbunden und gibt dann ein Messdatenpaket 45 an die Steuerung weiter, in dem alle Steuerbefehle 411...415 durch Messdaten 421...425 ersetzt sind.

## Patentansprüche

1. Mehrstufenumrichter (10, 20, 30) mit wenigstens einem Zweig (11, 31), der zwischen einer positiven Sammelschiene (131) und einer negativen Sammelschiene (132) geschaltet ist, wobei der Zweig (11, 31) wenigstens zwei in Serie geschaltete Arme aufweist, wobei die Arme jeweils eine Serienschaltung aus einer Mehrzahl von zweipoligen Submodulen (110...117, 210...217) umfassen, die einen Energiespeicher und eine Kommunikationsverbindung zu einer Steuereinrichtung (12, 17) des Mehrstufenumrichters (10, 20, 30) aufweisen, mittels derer zumindest eine Information (421...425) über einen Ladezustand des Energiespeichers sowie eine Schaltanweisung (411...414) für einen Schalter des Submoduls (110...117, 210...217) übertragbar ist, **dadurch gekennzeichnet, dass** für wenigstens einen Teil der Submodule (110...117, 210...217) die Kommunikationsverbindung als gemeinsame Kommunikationsverbindung aufgebaut ist und eine Mehrzahl von Isolationsstrecken (150...156, 210...212, 330...336) aufweist, wobei die Isolationsstrecken (150...156, 210...212, 330...336) eine Isolationsfähigkeit von jeweils höchstens 5 kV aufweisen und Übertrager (150...156, 210...212, 330...336), Kondensatoren oder kapazitive oder induktive Koppler umfassen.

2. Mehrstufenumrichter (10, 20, 30) nach Anspruch 1, bei dem die Isolationsstrecken 150...156, 210...212, 330...336) eine Isolationsfähigkeit von jeweils höchstens 3,3 kV, 2 kV, insbesondere höchstens 1,5 kV oder 600 V aufweisen.

3. Mehrstufenumrichter (10, 20, 30) nach Anspruch 1 oder 2, bei dem die Kommunikationsverbindungen aller Submodule (110...117, 210...217) eines Arms oder eines Zweigs als gemeinsame Kommunikationsverbindung aufgebaut sind.

4. Mehrstufenumrichter (10, 20, 30) nach einem der vorangehenden Ansprüche mit je einer gemeinsamen Kommunikationsverbindung für jeden der Arme.

5. Mehrstufenumrichter (10, 20, 30) nach einem der Ansprüche 1 bis 3 mit je einer gemeinsamen Kommunikationsverbindung für jeden der Zweige (11, 31).

6. Mehrstufenumrichter (10, 20, 30) nach einem der vorangehenden Ansprüche, bei dem die Kommunikationsverbindungen wenigstens eine Busverbindung ausbilden, bei der Signale jedes Submoduls (110...117, 210...217) direkt von der Steuereinrichtung (12, 17) empfangbar sind und umgekehrt.

7. Mehrstufenumrichter (10, 20, 30) nach einem der vorangehenden Ansprüche, bei dem die gemeinsame Kommunikationsverbindung als Verbindungen von einem Submodul (110...117, 210...217) zum nächsten Submodul (110...117, 210...217) aufgebaut ist.

8. Mehrstufenumrichter (10, 20, 30) nach einem der vorangehenden Ansprüche, bei dem die gemeinsame Kommunikationsverbindung zwischen den Anschlussstellen zweier in der Serienschaltung des Arms benachbarter Submodule (110...117, 210...217) eine der Isolationsstrecken (150...156, 210...212, 330...336) aufweist.

9. Mehrstufenumrichter (10, 20, 30) nach einem der vorangehenden Ansprüche, bei dem die Anzahl der Isolationsstrecken wenigstens die Hälfte der Anzahl der Submodule (110...117, 210...217) ist, insbesondere wenigstens 90% der Anzahl der Submodule (110...117, 210...217) ist.

10. Mehrstufenumrichter (10, 20, 30) nach einem der vorangehenden Ansprüche, bei dem die Reihenfolge der Anbindung der Submodule (110...117, 210...217) an die gemeinsame Kommunikationsverbindung der Reihenfolge der Anordnung im jeweiligen Arm des Mehrstufenumrichters (10, 20, 30) entspricht.

11. Mehrstufenumrichter (10, 20, 30) nach einem der vorangehenden Ansprüche, bei dem die gemeinsame Kommunikationsverbindung ringförmig ausgebildet ist mit zwei parallel zueinander geschalteten Strängen (32, 33), die an der Anschlussstelle eines ersten Submoduls (110...117, 210...217) und an der Anschlussstelle eines zweiten Submoduls (110...117, 210...217) miteinander verbunden sind.

12. Mehrstufenumrichter (10, 20, 30) nach Anspruch 11, bei dem beide Stränge (32, 33) dieselbe Anzahl von Isolationsstrecken (150...156, 210...212, 330...336) aufweisen.

13. Mehrstufenumrichter (10, 20, 30) nach Anspruch 11 oder 12, bei dem Submodule (110...117, 210...217) eines ersten Arms eines ersten Zweigs (11, 31) mit einem ersten der Stränge (32, 33) verbunden sind und Submodule (110...117, 210...217) eines ersten Arms eines zweiten Zweigs (11, 31) mit einem zweiten der Stränge (32, 33) verbunden sind.

## Claims

1. Multi-stage converter (10, 20, 30) with at least one branch (11, 31), which is connected between a positive busbar (131) and a negative busbar (132), wherein the branch (11, 31) has at least two arms connected in series, wherein the arms each comprise a series circuit made up of a plurality of two-pole submodules (110...117, 210...217), which have an energy store and a communication connection to a control device (12, 17) of the multi-stage converter (10, 20, 30), by means of which at least one item of information (421...425) about a state of charge of the energy store as well as a switching instruction (411...414) for a switch of the submodule (110...117, 210...217) is able to be transmitted, **characterised in that**, for at least a part of the submodules (110...117, 210...217), the communication connection is set up as a common communication connection and has a plurality of insulation paths (150...156, 210...212 330...336), wherein the insulation paths (150...156, 210...212 330...336) have an insulation capability in each case of at most 5 kV and comprise transformers (150...156, 210...212 330...336), capacitors or capacitive or inductive couplers.

2. Multi-stage converter (10, 20, 30) according to claim 1, in which the insulation paths (150...156, 210...212 330...336) have an insulation capability in each case of at most 3.3 kV, 2 kV, in particular of at most 1.5 kV or 600 V.

3. Multi-stage converter (10, 20, 30) according to claim 1 or 2, in which the communication connections of all submodules (110...117, 210...217) of an arm or of a branch are constructed as a common communication connection.

4. Multi-stage converter (10, 20, 30) according to one of the preceding claims, with one communication connection in each case for each of the arms.

5. Multi-stage converter (10, 20, 30) according to one of claims 1 to 3 with a common communication connection in each case for each of the branches (11, 31).

6. Multi-stage converter (10, 20, 30) according to one of the preceding claims, in which the communication connections form at least one bus connection, in which signals of each submodule (110...117, 210...217) are able to be received directly by the control device (12, 17) and vice versa.

7. Multi-stage converter (10, 20, 30) according to one of the preceding claims, in which the common communication connection is constructed as connections from one submodule (110...117, 210...217) to the next submodule (110...117, 210...217).

8. Multi-stage converter (10, 20, 30) according to one of the preceding claims, in which the common communication connection between the connection points of two neighbouring submodules (110...117, 210...217) in the series circuit of the arm has one of the insulation paths (150...156, 210...212 330...336).

9. Multi-stage converter (10, 20, 30) according to one of the preceding claims, in which the number of insulation paths is at least half the number of submodules (110...117, 210...217), in particular is at least 90% of the number of submodules (110...117, 210...217).

10. Multi-stage converter (10, 20, 30) according to one of the preceding claims, in which the order of linkage of the submodules (110...117, 210...217) to the common communication connection corresponds to the order of the arrangement in the respective arm of the multi-stage converter (10, 20, 30).

11. Multi-stage converter (10, 20, 30) according to one of the preceding claims, in which the common communication connection is embodied in the form of a ring with two strands (32, 33) connected in parallel to one another, which are connected to one another at the connection point of a first submodule (110...117, 210...217) and at the connection point of a second submodule (110...117, 210...217).

12. Multi-stage converter (10, 20, 30) according to claim 11, in which both strands (32, 33) have the same number of insulation paths (150...156, 210...212 330...336).

13. Multi-stage converter (10, 20, 30) according to claim 11 or 12, in which submodules (110...117, 210...217) of a first arm of a first branch (11, 31) are connected to a first of the strands (32, 33) and submodules (110...117, 210...217) of a first arm of a second branch (11, 31) are connected to a second of the strands (32, 33).

## Revendications

1. Convertisseur (10, 20, 30) à plusieurs étages, ayant au moins une branche (11, 31) montée entre une barre (131) collectrice positive et une barre (132) collectrice négative, la branche (11, 31) ayant au moins deux bras montés en série, les bras comprenant chacun un circuit série composé d'une pluralité de sous-modules (110...117, 210...217) bipolaires, qui ont un accumulateur d'énergie et une liaison de communication avec un dispositif (12, 17) de commande du convertisseur (10, 20, 30) à plusieurs étages, au moyen de laquelle au moins une information (421...425) sur un état de charge de l'accumulateur d'énergie, ainsi qu'une instruction (411...414) de coupure d'un interrupteur du sous-module (110...117, 210...217) peut être transmise, **caractérisé en ce que**, pour au moins une partie des sous-modules (110...117, 210...217), la liaison de communication est constituée sous la forme d'une liaison de communication commune et a une pluralité de segments (150...156, 210...212, 330...336) isolants, les segments (150...156, 210...212, 330...336) isolants ayant une capacité d'isolement chacun de 5 kV au plus et comprenant des transformateurs (150...156, 210...212, 330...336), des condensateurs ou des coupleurs capacitifs ou inductifs.

2. Convertisseur (10, 20, 30) à plusieurs niveaux suivant la revendication 1, dans lequel les segments (150...156, 210...212, 330...336) isolants ont une capacité d'isolement chacun de 3,3 kV, 2 kV au plus, notamment de 1,5 kV ou 600 V au plus.

3. Convertisseur (10, 20, 30) à plusieurs niveaux suivant la revendication 1 ou 2, dans lequel les liaisons de communication de tous les sous-modules (110...117, 210...217) d'un bras ou d'une branche sont constitués sous la forme d'une liaison de communication commune.

4. Convertisseur (10, 20, 30) à plusieurs niveaux suivant l'une des revendications précédentes, ayant, respectivement, une liaison de communication commune pour chacun des bras.

5. Convertisseur (10, 20, 30) à plusieurs niveaux suivant l'une des revendications 1 à 3, ayant, respectivement, une liaison de communication commune pour chacune des branches (11, 31).

6. Convertisseur (10, 20, 30) à plusieurs niveaux suivant l'une des revendications précédentes, dans lequel les liaisons de communication constituent au moins une liaison de bus, pour laquelle des signaux de chaque sous-module (110...117, 210...217) peuvent être reçus directement du dispositif (12, 17) de commande et inversement.

7. Convertisseur (10, 20, 30) à plusieurs niveaux suivant l'une des revendications précédentes, dans lequel la liaison de communication commune est constituée sous la forme de liaison d'un sous-module (110...117, 210...217) au sous-module (110...117, 210...217) voisin.

8. Convertisseur (10, 20, 30) à plusieurs niveaux suivant l'une des revendications précédentes, dans lequel la liaison de communication commune a, entre les points de connexion de deux sous-modules (110...117, 210...217) voisins dans le circuit série du bras, l'un des segments (150...156, 210...212, 330...336) isolants.

9. Convertisseur (10, 20, 30) à plusieurs niveaux suivant l'une des revendications précédentes, dans lequel le nombre des segments isolants est au moins le double du nombre des sous-modules (110...117, 210...217), en représentant notamment au moins 90% du nombre des sous-modules (110...117, 210...217).

10. Convertisseur (10, 20, 30) à plusieurs niveaux suivant l'une des revendications précédentes, dans lequel la succession de la liaison des sous-modules (110...117, 210...217) à la liaison de communication commune correspond à la succession de l'agencement dans le bras respectif du convertisseur (10, 20, 30) à plusieurs étages.

11. Convertisseur (10, 20, 30) à plusieurs niveaux suivant l'une des revendications précédentes, dans lequel la liaison de communication commune est constituée de manière annulaire, en ayant deux brins (32, 33) montés en parallèle l'un à l'autre, qui sont reliés entre eux au point de connexion d'un premier sous-module (110...117, 210...217) et au point de connexion d'un deuxième sous-module (110...117, 210...217).

12. Convertisseur (10, 20, 30) à plusieurs niveaux suivant la revendication 11, dans lequel les deux brins (32, 33) ont le même nombre de segments (150...156, 210...212, 330...336) isolants.

13. Convertisseur (10, 20, 30) à plusieurs niveaux suivant la revendication 11 ou 12, dans lequel des sous-modules (110...117, 210...217) d'un premier bras d'une première branche (11, 31) sont reliés à un premier des brins (32, 33) et des sous-modules (110...117, 210...217) d'un premier bras d'une deuxième branche (11, 31) sont reliés à un deuxième des brins (32, 33).
